Europäisches Patentamt

European Patent Office

Office européen des brevets

(19)

(11) Publication number: **0 319 291 B1**

(12) # EUROPEAN PATENT SPECIFICATION

(45) Date of publication of patent specification: **26.05.93**   (51) Int. Cl.⁵: **G09G 3/36, H04N 3/12**

(21) Application number: **88311385.4**

(22) Date of filing: **01.12.88**

(54) **Display device.**

(30) Priority: **04.12.87 GB 8728434**

(43) Date of publication of application:
**07.06.89 Bulletin 89/23**

(45) Publication of the grant of the patent:
**26.05.93 Bulletin 93/21**

(84) Designated Contracting States:
**AT BE CH DE ES FR GB GR IT LI LU NL SE**

(56) References cited:
**EP-A- 0 261 901**
**US-A- 4 655 561**

(73) Proprietor: **THORN EMI plc**
**4 Tenterden Street**
**London W1A 2AY(GB)**

(72) Inventor: **Bull, Steven David**
**9 Glebe Avenue**
**Ripley Derbyshire(GB)**
Inventor: **Morris, Christopher James**
**7 Gladstone Avenue**
**Feltham Middlesex, TW14 9LJ(GB)**

(74) Representative: **Hurst, Richard Arthur Alexander et al**
**THORN EMI Patents Limited, Central Research Laboratories, Dawley Road**
**Hayes, Middlesex UB3 1HH (GB)**

**Description**

The present invention relates to a display device and particularly but not solely to a liquid crystal display.

In an existing group time – multiplexing addressing technique for a display having rows of pixels, as disclosed in our copending European Patent Application No. EP – A – 0261901 the addressing includes setting simultaneously groups of the rows, each group consisting of a plurality of rows spaced apart in the addressing sequence such that the rows spaced apart in the addressing sequence such that the rows in a group form a series with adjacent rows having a temporal separation in the addressing sequence exhibiting a binary progression. For two – bit multiplexing, this technique provides a display with four grey levels. When this is combined with a scheme addressing a pixel with two separately energisable areas (known as "spatial – dither"), a display with sixteen levels can be achieved.

An object of the present invention is to provide a group time – multiplexing technique which can provide an increased number of grey levels in a display.

The present invention provides a method of operating a display device having a matrix of pixels each selectably settable in any of N grey – scale states comprising:

receiving a signal representing a picture for display, the signal comprising M sections, each section having a different weight;

time – multiplex addressing groups of pixels M times within M group address periods for each picture, the addressing of respective members within each group being such that the members are spaced apart according to a geometric progression with common ratio N, where N is at least 3, and the duration for which each respective signal section is addressed to any given pixel in a group also being in accordance with the geometric progression.

After being addressed, the pixel elements remain, or are maintained, set until the next addressing occurs. Thus the time duration of a pixel being set depends on the temporal separation in the addressing sequence between the collection of that pixel and the next collection in the group, this separation having a geometric progression relationship in a group as hereinbefore indicated. Thus the addressing means operates to set a collection for a first predetermined time interval in one address for a given picture, and then to set the collection for a second predetermined time interval in another address for that picture thereby providing differing settingtimes for different addresses of a collection for a given picture. Accord – ingly, by equating the orders of group time multiplexing and of spatial dither, maximal efficient and effective operation of both techniques can be achieved for a given number of grey levels required.

According to another aspect of the present invention there is provided a display device comprising:

a matrix of pixels each selectably settable in any of N grey – scale states in dependence upon a received signal representing a picture for display, the signal comprising M sections, each section having a different weight;

time multiplex addressing means for addressing groups of pixels M times within M group address periods for each picture, the addressing of respective members within each group being such that the members are spaced apart according to a geometric expression with common ratio N, where N is at least 3, and the duration for which each respective signal section is addressed to any given pixel in a group also being in accordance with the geometric progression.

The present invention enables the effective addressing of a lattice of bi – stable settable pixel elements without requiring additional lines and drivers, or high resolution spatial dither techniques or extremely fast switching times.

Preferably, a pixel comprises one or more liquid crystal cells.

The present invention is applicable to colour displays and to monochrome displays.

Another aspect of the present invention provides equipment suited and/or designed for the generation of signals of a format for a display device embodying the present invention, for example of a format as described and shown herein. Further aspects of the present invention provide equipment suited and/or designed for the transmission of such signals, equipment suited and/or designed for the reception of such signals, and equipment for the processing of such signals. Thus, for example, the present invention embodies a driver integrated circuit which is suited and/or designed for the addressing of a display device in the manner herein described.

As indicated elsewhere in this patent specification, N can have any integral value above. and including, 3; particularly advantageous values include 4, 8 and 16 as these provide particularly effective and efficient operation with spatial – dither techniques having the orders of (i.e. the number of separately – settable areas per pixel) 2, 3 and 4 respectively.

In order that the invention may more readily be understood, a description is now given, by way of example only, reference being made to the accompanying Figures of which:

Figure 1 shows the number of grey levels which can be obtained in an example of a scheme provided in accordance with the present invention;

Figure 2 shows schematically an addressing scheme provided in accordance with the present invention;

Figure 3 shows a block dagram of a circuit for putting the invention into effect;

Figure 4 shows a block circuit diagram of a display device provided in accordance with the present invention;

Figure 5 illustrates the addressing of collections of rows in the device of Figure 4;

and Figure 6 shows typical column waveforms for a matrix−array type addressing method.

The example concerns a technique for implementing greyscale on a display with a set of discrete brightness states, such as a ferroelectric liquid crystal display employing spatial dither.

For a display with pixels each having N brightness or selectively settable states the number of perceived brightness states i.e. grey levels is increased by using time dither, that is to say that the pixels can be moved from one state to another in a pattern such that intermediate brightness levels are perceived. A convenient way of doing this is by using a set of M time periods whose lengths differ by a factor of N. The pixel can then be set at a different brightness levels during each time period giving $N^M$ available brightness or grey levels. Thus, the technique operates in a number base which is set by the number of states that a given pixel on the display can be in. Matrix addressed displays are written line by line and this has to be taken account of when allocating the weighted time periods.

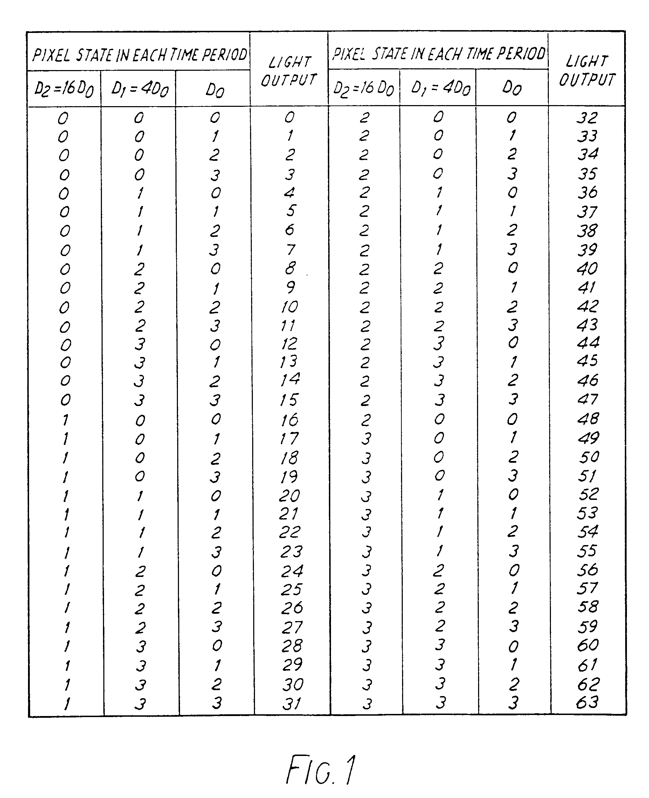

Figure 1 shows the number of grey levels which can be obtained with a scheme in which $N = 4$ and $M = 3$. The three time periods are $D_0$, $D_1$ and $D_2$ with $D_2/D_1 = D_1/D_0 = 4$. Each pixel can be in one of four light output states 0, 1, 2, 3 in each time period. The grey level for a light output is given by adding '1' to the light output i.e. when the light output is zero, then the grey level of the pixel is 1.

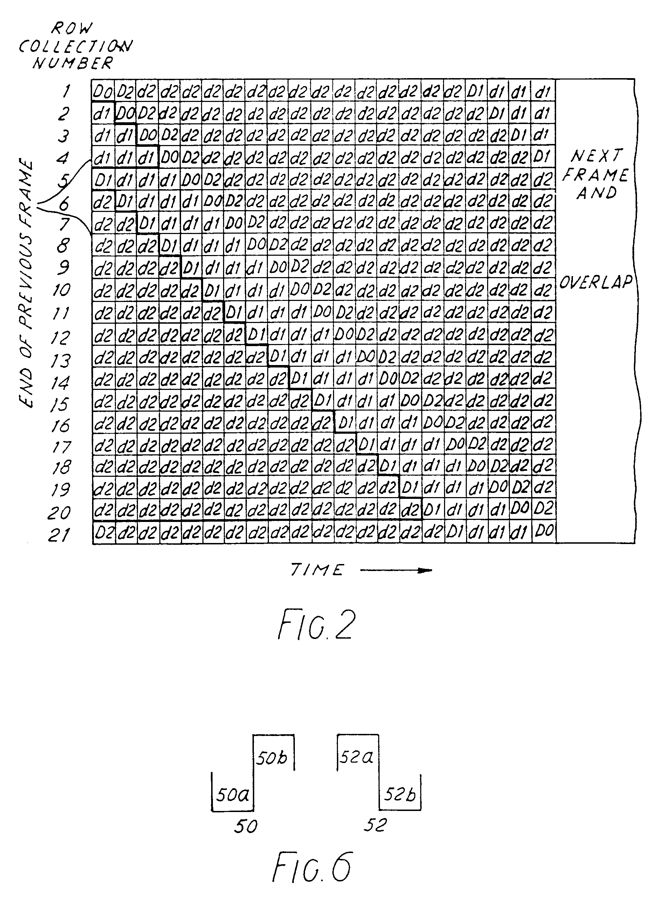

In the matrix addressing scheme according to the present invention, the weighted time periods $D_0$, $D_1$ and $D_2$ are achieved as a logical consequence of the order in which the rows are scanned as shown in Figure 2. To achieve this, a signal representing a picture for display comprises a plurality of portions each representing the data for setting a pixel element in the lattice. Each such portion is constitued by a plurality of sections or bits, a section representing the addressing data for the pixel element in respect of one address in that picture. Thus, the number of sections in a portion is equal to the number of address times for which any pixel element is addressed for one picture. e.g. In the scheme of Figure 2, each portion comprises three sections $D_2$, $D_1$, $D_0$ and each pixel element is addressed three times for one picture. For a scheme with M time period whose lengths differ by a factor of N, the minimum number of rows in the display device is

$$\frac{(N^M - 1)}{(N - 1)}$$

Accordingly, a display device operated by this scheme preferably has a number of rows equal to a multiple x of

$$\frac{(N^M - 1)}{(N - 1)}.$$

Where x is greater than one, the lattice of pixels can be divided into minifields or collections of rows, preferably with the number of rows in a collection equal to x. (In the case where $x = 1$, the collection comprises one row).

Referring to Figure 2, this shows schematically the matrix−addressing of a scheme involving base−four group time multiplexing with pixel brightness being represented by bits $D_2$, $D_1$, $D_0$ (3−bit time dither in base four), each pixel having two selectively−settable areas giving four states (2−bit spatial dither). The upper case 'D's represent a collection being written with that bit while lower case 'd's represent data still displayed due to bistability of the pixel elements (e.g. liquid crystal cells). The display is divided as shown, into 21 collections of rows as shown.

In the first group−address period, the first collection of rows has the least−signifcant bit $D_0$ written to it (this involves writing the two bits of spatial dither, these bits representing 4 levels). Similarly collection 5 has its second most significant bit $D_1$ written to it, and collection 21 has its most – significant bit $D_2$ written up.

Now, in the second group – address period, the addressed collections have moved one collection of rows down the display. Thus for example, collection 2 now has its least – significant bit $D_0$ written to it, collection 6 now has its secondmost – significant bit $D_1$ written and now collection 1 (which is the collection after collection 21) has its most – significant bit addressed.

Note that collection 1 has now had its least – significant bit over – written, so that least – significant bit was on display for one group – address period only. Similarly row 5 has its secondmost – significant bit on display for four group – address periods and collection 21 has its most – significant bit on display for sixteen collection group address periods. This means that data written to collections of rows is displayed for a period of time corresponding to the significance of the bit displayed.

When a collection of rows is addressed, four levels must be set for the base 4 scheme. This is done by employing two bits of spatial dither with the areas of the two areas scaled in the ration 2:1, these two areas must be addressed in parallel.

It can be seen from the diagram that a full 64 level grey – scale picture can be built up in 21 group – address periods.

Thus scheme differs from the existing group time multiplex technique in that the addressing sequence now follows a base 4 period i.e. 1:4:16, and so on, instead of 1:2:4 for the existing technique. This results in a different interval of time between readdressing of a particular collection of rows. An existing group time – multiplex scheme with three bits of time dither allows 8 grey – levels to be displayed whereas a scheme embodying the present invention with two bits of spatial dither and 3 bits of time dither allows 64 grey – levels to be displayed.

Thus, in a general N, M non – sequential group addressing scheme, the required brightness at each pixel on the display is first converted to base N. During the first group address interval the first group of collections of lines is written to. Row collection numbers

$$\frac{(N^k - 1)}{(N - 1)}$$

are members of this group for $k \in (1....M)$.

Each pixel in each of these collections of rows has the kth digit of the base N representation of its brightness written on it. Thus pixels in the first collection of rows have their least significant digits written to them and pixels in row collection $N + 1$ have their next most significant digit written to them, and so on. In the following group address intervals successive groups are written to in a similar fashion. Successive groups are obtained by adding 1 module $j + 1$ to the collection number of each member of the previous group, where j is the total number of collection of rows.

The order in which the row collections within a group are written is chosen to minimise the errors introduced by the finite switching speed of the pixel elements. The total error decreases as N increases. The rows within each collection of rows can be written to in any sequence so long as this sequence is maintained each time they are written to.

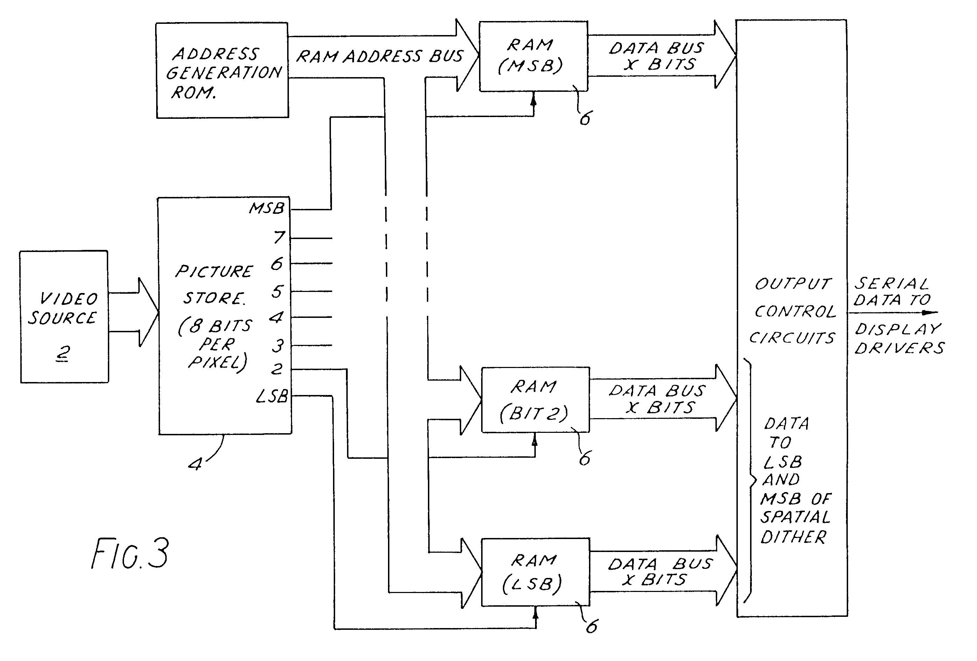

In a preferred arrangement, the rows in a particular collection are adjacent to each other. The picture store can therefore be addressed in collections instead of single rows, so reducing the number of address operations. Figure 3 is a block circuit diagram for a display device in which the rows are addressed as collections containing x rows.

A signal is received from a video source 2 and stored in a picture store 4 with a capacity to hold a sufficient amount of the video signal to represent the display of a complete image, i.e. one picture of the video signal. In the scheme of the present example, the picture store holds 8 bits per pixel. The least significant bit and bit 2 control the spatial dither of two subpixels which form a pixel having four selectively settable states. The other six binary bits correspond to the bits $D_2$, $D_1$, $D_0$ in base 4. In this way, the conversion of the required brightness at each pixel to base N is made simply by using two binary bits. Thus, preferably $N = 2^y$ where y is an integer for ease of information storage and manipulation.

Data is accessed from the picture store 4, each bit then being stored in one of eight RAMs 6 depending on its significance. Data is then retrieved from the RAMs 6 in a fashion suitable to write a bit of a particular significance to a collection of rows of the display in one operation. The resultant signals are passed to control circuits and pixel drivers which operate on a lattice of pixels.

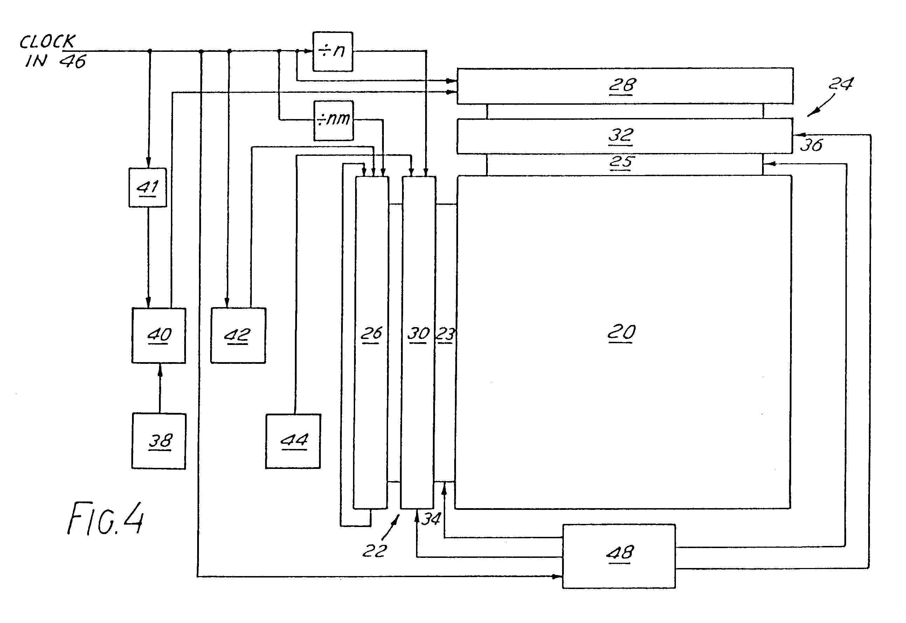

Figure 4 shows a display device with a lattice of pixel elements (indicated generally at 20) and a first versatile shift arrangement 22 for selecting the addressing of the rows via a plurality 23 of drivers and XOR gates and a second versatile shift arrangement 24 for selecting the addressing of the columns via a plurality 25 of drivers and XOR gates. Each versatile shift arrangement 22, 24 comprises first register means 26, 28 and second register means 30, 32. A control input 34 to the second register means 30 for addressing the rows is held high so that this register means 30 is in bypass mode. A control input 36 to the second register means 32 for addressing the columns is held low so that this register means 32 is effective as a set of transparent latches.

If the second register means 30 is in bypass mode, then information present in a stage of the first register means 26 determines whether or not the corresponding stage in the second register means 30 is bypassed or can be enabled.

A signal is received from a video source 38 corresponding to one picture in length and stored in a column data RAM 40. The order in which the pixels are to be written is determined by an address ROM 41. A mask data ROM 42 determines the position of the members of a group to be addressed in a non-sequential group addressing scheme according to the present invention. This information is loaded serially into the first shift register means 26 of the row versatile shift arrangement 22. A strobe bit from a scan data ROM 44 is loaded into the second shift register means, its position determining which of the rows or collections of rows is to be strobed as outlined below with respect to Figure 6.

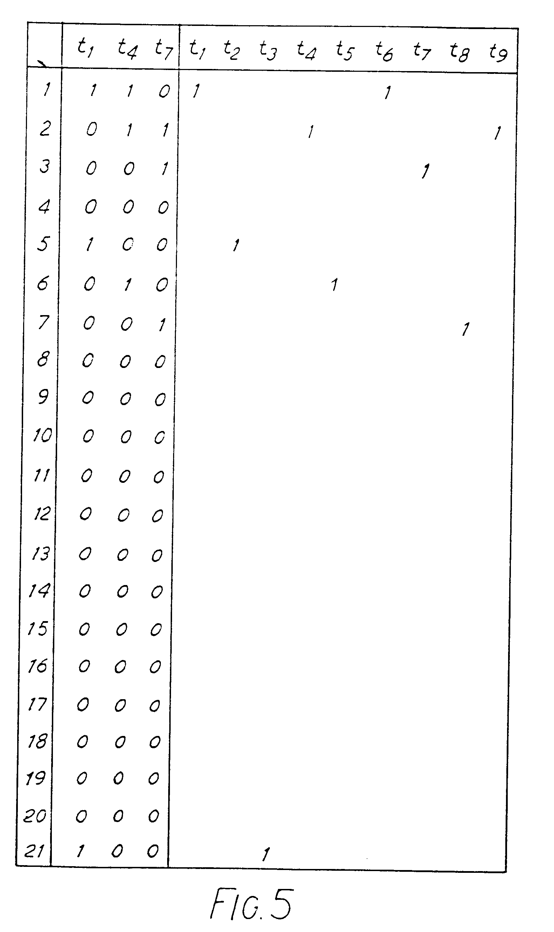

Figure 6 shows how the collections of rows are to be strobed using the versatile shift arrangement 22 of Figure 5. The first column indicates the position of collections of pixel elements and the associated register stages of the first register means 26 and second register means 30. The second set of columns indicates the information present in the register stages of the first register means 26 at times $t_1$, $t_4$ and $t_7$. The third set of columns indicates the output of the corresponding stages of the second register means at times $t_1$ to $t_9$.

As M = 3, the group of collections to be addressed in any addressing step consists of three members. The position of each member of the group for time $t_1$ is loaded into the appropriate stages of the first register means as bits '1', the other stages in the first register means being loaded with bits '0'. The strobe select bit is clocked along the second register means. If the input to a stage of a second register means from the respective stage of the first register means is low, i.e. contains a bit '0', then that stage is bypassed. If the input to a stage of a second register means from the respective stage of the first register means is high, i.e. contains a bit '1'. then that stage is enabled and the corresponding collection of pixel elements i strobed. Thus, at time $t_1$, collection 1 is strobed. At time $t_2$, the strobe bit would be clocked to strobe collection 2 but this stage in the second register means has been bypassed as the respective stage in the first register means contains a '0'. Accordingly, the strobe bit is passed to the next stage in the second register means which has not been bypassed. This stage is 5 so collection 5 is strobed at time $t_2$. Similarly at time $t_3$, collection 21 is strobed. After time $t_3$, all the members of the group have been strobed and so a signel clock pulse to the first register means moves the positions of the whole group along by one position, and the addressing continues. Thus, the order in which the collections is addressed is 1, 5, 21, 2, 6, 1, 3, 7, 2 etc. The first register means is effective as a mask to specify which of the stages in the second register means should be bypassed.

When clock pulses of frequency f from a source 46 are applied to the column data RAM 40 via the address ROM 41, data for pixels of the next collection to be strobed is loaded serially into the first shift register means 28 of the column versatile shift arrangement 24 and hence is present at the output of the register stages of the second shift register means 32. Accordingly if the number of pixels in a row is n, then a clock pulse of frequency f/n is applied to the second shift register means 30 of the row versatile shift arrangement 22 to clock the strobe bit and a clock pulse of frequency f/nm is applied to the first shift register means 26 to move the positions of the members of the group along by one. (the value of m is determined by the particular non-sequential group addressing scheme used). A multiplex controller 48 controls the waveforms to be produced by the column drivers and XOR gates 23, 25 in response to the data loaded into the versatile shift arrangements 22, 24.

The outputs of the stages in the second register means are connected to the inputs of exclusive-or (XOR) gates, which is particularly advantageous for arrangements 24 used in column drivers. The truth table for an XOR gate is shown below.

| Input 1 | Input 2 | Output |
|---------|---------|--------|
| 0 | 0 | 0 |
| 0 | 1 | 1 |
| 1 | 0 | 1 |
| 1 | 1 | 0 |

In a matrix – array type addressing method in which collections or rows of pixel elements are strobed, the waveform applied to a column determines whether or not the pixel at the intersection of the strobed collection and that column is 'on' or 'off'. Figure 7 shows an example of a column 'on' and a corresponding column 'off' waveform. As can be seen, each waveform 50, 52 can be divided into subwaveforms 50a, 50b; 52a, 52b of the same shape but a different polarity. Thus, if a negative polarity subwaveform 50a, 52b is produced by a stage with a '0' output and a positive polarity subwaveform 50b, 52a is produced by a stage with a '1' output, it is possible to generate the required waveforms at the column drivers by loading in a '0' or a '1' at the appropriate register stage to generate the subwaveform of the correct polarity. The output of the register stage is connected to the input of an XOR gate follows the input. The other subwaveform can then simply be generated by changing the other input of the XOR gate to '1'.

In any one picture it will be possible to differentiate $N^M$ grey levels; however this may not be adequate to display the full dynamic range of brightness levels with particular values of N and M in successive pictures, since very bright or very dark pictures will lose contrast and fade out. As an alternative to increasing the values of N or M there may be used an adaptive greyscale scheme in which the mean brightness level of the preceding field sets the reference voltage of a 4 – bit A/D converter. The analogue signal is converted by the A/D converter so that the 4 – bits scale the range of brightness in the previous picture ensuring that $N^M$ grey levels can always be resolved in each picture; This is achieved by detecting some defined mean brightness level of the previous frame; the level is compared with the 100% brightness level in a step comparator which then provides a variable reference voltage to scale the brightness levels.

To vary the brightness level on the display in accordance with the adaptive scaling, the collections in a group are scaled over a fraction of the address line. Address lines outside the group are blanked by a blanking pulse applied in the form of an additional bit of information at the end of the period displaying the most significant bit. This decreases the group write time available. This adaptive feature essentially provides an automatic contrast and brightness adjustment so that at least $N^M$ grey levels can always be resolved in any scene irrespective of brightness.

Modifications to the embodiments described and within the scope of the present invention as defined by the claims will be apparent to these skilled in the art.

**Claims**

1. A method of operating a display device having a matrix of pixels each selectably settable in any of N grey – scale states comprising:
   receiving a signal representing a picture for display, the signal comprising M sections, each section having a different weight;
   time – multiplex addressing groups of pixels M times within M group address periods for each picture, the addressing of respective members within each group being such that the members are spaced apart according to a geometric progression with common ratio N, where N is at least 3, and the duration for which each respective signal section is addressed to any given pixel in a group also being in accordance with the geometric progression.

2. A method according to claim 1 wherein the addressing includes setting all of the pixels within a first respective member of said group in accordance with respective first sections of signal data and, sequentially within a defined address period, setting all the pixels of a second respective member of said group in accordance with the respective second sections of signal data.

3. A method according to any one of the preceding claims wherein the matrix comprises a number of rows of pixels, this number being a multiple of

$$\frac{(N^M-1)}{(N-1)}.$$

4. A method according to any one of the preceding claims wherein said group comprises a plurality of rows of pixels.

**5.** A method according to either claim 3 or claim 4 wherein the number of rows of pixels in the number or rows within the whole matrix divided by

$$\frac{(N^M-1)}{(N-1)}.$$

**6.** A method according to claim 1 or claim 2 wherein each respective member comprises a single row of pixels.

**7.** A method according to any one of the preceding claims further comprising: providing a value for a mean brightness level for a first picture and effecting scaling of sections of pixel data for each group in the next picture in accordance with the value for the first picture.

**8.** A display device comprising:

a matrix of pixels each selectably settable in any of N grey-scale states in dependence upon a received signal representing a picture for display, the signal comprising M sections, each section having a different weight;

time multiplex addressing means for addressing groups of pixels M times within M group address periods for each picture, the addressing of respective members within each group being such that the members are spaced apart according to a geometric expression with common ratio N, where N is at least 3, and the duration for which each respective signal section is addressed to any given pixel in a group also being in accordance with the geometric progression.

**9.** A display device according to claim 8 wherein the matrix comprises a number of rows of pixels equal to

$$\frac{(N^M-1).}{(N-1)}$$

**10.** A display device according to claim 9 wherein the members of said group comprise a plurality of adjacent rows of pixels.

**11.** A display device according to claim 9 or claim 10 wherein the number of rows of pixels is the number of rows within the whole matrix divided by

$$\frac{(N^M-1).}{(N-1)}$$

**12.** A display device according to any one of claims 8-11 wherein each respective member of said group comprises a single row of pixels.

**13.** A display device according to claim 11 wherein each collection comprises a plurality of adjacent rows.

**14.** A display device according to claims 11 and 12, each collection comprising a plurality of rows, wherein the number of rows in each collection is the number of rows in the lattice divided by

$$\frac{(N^M-1).}{(N-1)}$$

**15.** A display device according to any one of claims 9 to 14 wherein each collection comprises a single row of pixel elements.

**Patentansprüche**

**1.** Verfahren zum Betrieb einer Anzeigevorrichtung, die eine Matrix von Pixeln aufweist, von denen jedes wahlweise in einen von N Graustufen − Zuständen einstellbar ist, umfassend:

Empfangen eines Signals, das ein anzuzeigendes Bild darstellt, wobei das Signal M Abschnitte enthält, von denen jeder ein unterschiedliches Gewicht hat;

M − maliges Zeitmultiplex − Adressieren von Pixelgruppen innerhalb von M Gruppen Adressierpe − rioden für jedes Bild, wobei das Adressieren von entsprechenden Gliedern innerhalb jeder Gruppe so erfolgt, daß die Glieder einen Abstand voneinander gemäß einer geometrischen Reihe mit dem gemeinsamen Verhältnis N haben, wobei N wenigstens gleich 3 ist, und wobei die Dauer, für die jeder entsprechende Signalabschnitt an irgendein gegebenes Pixel in einer Gruppe adressiert wird, ebenfalls in Übereinstimmung mit der geometrischen Reihe ist.

**2.** Verfahren nach Anspruch 1, bei dem das Adressieren das Einstellen aller Pixel innerhalb eines ersten entsprechenden Gliedes der Gruppe in Übereinstimmung mit entsprechenden ersten Abschnitten von Signaldaten einschließt und der Reihe nach innerhalb einer definierten Adressenperiode alle Pixel eines zweiten entsprechenden Gliedes der Gruppe in Übereinstimmung mit den entsprechenden zweiten Abschnitten von Signaldaten eingestellt werden.

**3.** Verfahren nach einem der vorhergehenden Ansprüche, bei dem die Matrix eine Anzahl von Pixelreihen enthält, wobei die Anzahl ein Vielfaches von

$$\frac{(N^M - 1)}{(N - 1)}$$

ist.

**4.** Verfahren nach einem der vorhergehenden Ansprüche, bei dem die Gruppe eine Vielzahl von Pixelrei − hen enthält.

**5.** Verfahren nach Anspruch 3 oder 4, bei dem die Anzahl von Pixelreihen die Anzahl von Reihen innerhalb der gesamten Matrix geteilt durch

$$\frac{(N^M - 1)}{(N - 1)}$$

ist.

**6.** Verfahren nach Anspruch 1 oder 2, bei dem jedes entsprechende Glied eine einzelne Pixelreihe umfaßt.

**7.** Verfahren nach einem der vorhergehenden Ansprüche, umfassend: Vorsehen eines Wertes für einen mittleren Helligkeitspegel für ein erstes Bild und Bewirken einer Skalierung von Abschnitten von Pixeldaten für jede Gruppe in dem nächsten Bild in Übereinstimmung mit dem Wert für das erste Bild.

**8.** Anzeigevorrichtung, umfassend:

Eine Matrix von Pixeln, von denen jedes wahlweise in einen von N Graustufen − Zuständen in Abhängigkeit von einem empfangenen Signal, das ein Bild für eine Anzeige darstellt, einstellbar ist, wobei das Signal M Abschnitte umfaßt, von denen jeder ein unterschiedliches Gewicht hat;

Zeitmultiplex − Adressiermittel zum M − maligen Adressieren von Pixelgruppen innerhalb von M Gruppen Adressierperioden für jedes Bild, wobei das Adressieren von entsprechenden Gliedern

8

innerhalb jeder Gruppe so erfolgt, daß die Glieder einen Abstand voneinander gemäß einer geometrischen Reihe mit dem gemeinsamen Verhältnis N haben, wobei N wenigstens gleich 3 ist, und wobei die Dauer, während der jeder entsprechende Signalabschnitt an irgendein gegebenes Pixel in einer Gruppe adressiert wird, ebenfalls in Übereinstimmung mit der geometrischen Reihe ist.

9. Anzeigevorrichtung nach Anspruch 8, bei der die Matrix eine Anzahl von Pixelreihen umfaßt, die gleich

$$\frac{(N^M - 1)}{(N - 1)}$$

ist.

10. Anzeigevorrichtung nach Anspruch 9, bei der die Glieder der Gruppe eine Vielzahl von benachbarten Pixelreihen umfassen.

11. Anzeigevorrichtung nach Anspruch 9 oder 10, bei der die Anzahl von Pixelreihen gleich der Anzahl von Reihen innerhalb der gesamten Matrix geteilt durch

$$\frac{(N^M - 1)}{(N - 1)}$$

ist.

12. Anzeigevorrichtung nach einem der Ansprüche 8 bis 11, bei der jedes entsprechende Glied der Gruppe eine einzelne Pixelreihe umfaßt.

13. Anzeigevorrichtung nach Anspruch 11, bei der jede Ansammlung eine Vielzahl von benachbarten Reihen umfaßt.

14. Anzeigevorrichtung nach Anspruch 11 und 12, bei der jede Ansammlung eine Vielzahl von Reihen umfaßt, wobei die Zahl der Reihen in jeder Ansammlung gleich der Zahl der Reihen in dem Gitter geteilt durch

$$\frac{(N^M - 1)}{(N - 1)}$$

ist.

15. Anzeigevorrichtung nach einem der Ansprüche 9 bis 14, bei der jede Ansammlung eine einzelne Reihe von Pixelelementen umfaßt.

## Revendications

1. Procédé d'exploitation d'un dispositif d'affichage comportant une matrice de pixels dont chacun peut être réglé, d'une manière pouvant être sélectionnée, dans l'un quelconque de N états d'une échelle des gris, consistant à :

recevoir un signal représentant une image pour son affichage, le signal comprenant M sections dont chacune possède un poids différent;

l'adressage en multiplexage temporel de groupes de pixels M fois dans M périodes d'adresses de groupes pour chaque image, l'adressage des éléments respectifs dans chaque groupe étant tel que ces éléments sont espacés conformément à une progression géométrique avec le rapport commun N, N étant égal au moins à 3, et la durée, pendant laquelle chaque section respective du signal est adressée pour un pixel quelconque donné dans un groupe, correspondant également à la progression géométrique.

2. Procédé selon la revendication 1, selon lequel l'adressage comprend le réglage de tous les pixels situés dans une première partie respective dudit groupe en fonction de premières sections respectives de données et le réglage, d'une manière séquentielle pendant une période d'adresse définie, de tous les pixels d'une seconde partie respective dudit groupe en fonction de secondes sections respectives de données du signal.

3. Procédé selon l'une quelconque des revendications précédentes, selon lequel la matrice comprend un nombre de rangées de pixels, ce nombre étant un multiple de

$$\frac{(N^M-1)}{(N-1)}.$$

4. Procédé selon l'une quelconque des revendications précédentes, selon lequel ledit groupe comprend une pluralité de rangées de pixels.

5. Procédé selon la revendication 3 ou 4, selon lequel le nombre de rangées de pixels est égal au nombre de rangées dans l'ensemble de la matrice, divisé par

$$\frac{(N^M-1)}{(N-1)}.$$

6. Procédé selon la revendication 1 ou 2, selon lequel chaque partie respective comprend une seule rangée de pixels.

7. Procédé selon l'une quelconque des revendications précédentes, comprenant en outre : l'utilisation d'une valeur pour un niveau de luminosité moyen pour une première image et le changement d'échelle de sections de données de pixels pour chaque groupe dans l'image suivante en fonction de la valeur pour la première image.

8. Dispositif d'affichage comprenant :
une matrice de pixels dont chacun peut être réglé d'une manière pouvant être sélectionnée dans l'un quelconque de N états d'une échelle des gris, en fonction d'un signal reçu représentant une image à afficher, le signal comprenant M sections, dont chacune possède un poids différent;
des moyens d'adressage à multiplexage temporel pour adresser des groupes de pixels M fois à l'intérieur de M périodes d'adresses de groupes pour chaque image, l'adressage de parties respectives dans chaque groupe étant tel que les parties sont espacées conformément à une progression géométrique avec un rapport commun N, N étant égal au moins à 3, et la durée, pendant laquelle chaque section de signal respective est adressée pour n'importe quel pixel donné dans un groupe, également en correspondance avec la progression géométrique.

9. Dispositif d'affichage selon la revendication 8, dans lequel la matrice comprend un nombre de rangées de pixels égal à

$$\frac{(N^M-1)}{(N-1)}.$$

10. Dispositif d'affichage selon la revendication 9, dans lequel les parties dudit groupe comprennent une pluralité de rangées adjacentes de pixels.

11. Dispositif d'affichage selon la revendication 9 ou 10, dans lequel le nombre de rangées de pixels est égal au nombre de rangées dans l'ensemble de la matrice, divisé par

$$\frac{(N^M-1)}{(N-1)}.$$

12. Dispositif d'affichage selon l'une quelconque des revendications 8 – 11, dans lequel chaque partie respective dudit groupe comprend une seule rangée de pixels.

13. Dispositif d'affichage selon la revendication 11, dans lequel chaque ensemble comprend une pluralité de rangées adjacentes.

14. Dispositif d'affichage selon les revendications 11 et 12, dans lequel chaque ensemble comprend une pluralité de rangées, le nombre de rangées dans chaque ensemble étant égal au nombre de rangées dans le réseau, divisé par

$$\frac{(N^M-1)}{(N-1)}.$$

15. Dispositif d'affichage selon l'une quelconque des revendications 9 à 14, dans lequel chaque ensemble comprend une seule rangée de pixels.

| PIXEL STATE IN EACH TIME PERIOD | | | LIGHT OUTPUT | PIXEL STATE IN EACH TIME PERIOD | | | LIGHT OUTPUT |
|---|---|---|---|---|---|---|---|
| $D_2 = 16 D_0$ | $D_1 = 4 D_0$ | $D_0$ | | $D_2 = 16 D_0$ | $D_1 = 4 D_0$ | $D_0$ | |
| 0 | 0 | 0 | 0 | 2 | 0 | 0 | 32 |
| 0 | 0 | 1 | 1 | 2 | 0 | 1 | 33 |
| 0 | 0 | 2 | 2 | 2 | 0 | 2 | 34 |
| 0 | 0 | 3 | 3 | 2 | 0 | 3 | 35 |
| 0 | 1 | 0 | 4 | 2 | 1 | 0 | 36 |
| 0 | 1 | 1 | 5 | 2 | 1 | 1 | 37 |
| 0 | 1 | 2 | 6 | 2 | 1 | 2 | 38 |
| 0 | 1 | 3 | 7 | 2 | 1 | 3 | 39 |
| 0 | 2 | 0 | 8 | 2 | 2 | 0 | 40 |
| 0 | 2 | 1 | 9 | 2 | 2 | 1 | 41 |
| 0 | 2 | 2 | 10 | 2 | 2 | 2 | 42 |
| 0 | 2 | 3 | 11 | 2 | 2 | 3 | 43 |
| 0 | 3 | 0 | 12 | 2 | 3 | 0 | 44 |
| 0 | 3 | 1 | 13 | 2 | 3 | 1 | 45 |
| 0 | 3 | 2 | 14 | 2 | 3 | 2 | 46 |
| 0 | 3 | 3 | 15 | 2 | 3 | 3 | 47 |
| 1 | 0 | 0 | 16 | 2 | 0 | 0 | 48 |
| 1 | 0 | 1 | 17 | 3 | 0 | 1 | 49 |
| 1 | 0 | 2 | 18 | 3 | 0 | 2 | 50 |
| 1 | 0 | 3 | 19 | 3 | 0 | 3 | 51 |
| 1 | 1 | 0 | 20 | 3 | 1 | 0 | 52 |
| 1 | 1 | 1 | 21 | 3 | 1 | 1 | 53 |
| 1 | 1 | 2 | 22 | 3 | 1 | 2 | 54 |
| 1 | 1 | 3 | 23 | 3 | 1 | 3 | 55 |
| 1 | 2 | 0 | 24 | 3 | 2 | 0 | 56 |
| 1 | 2 | 1 | 25 | 3 | 2 | 1 | 57 |
| 1 | 2 | 2 | 26 | 3 | 2 | 2 | 58 |
| 1 | 2 | 3 | 27 | 3 | 2 | 3 | 59 |
| 1 | 3 | 0 | 28 | 3 | 3 | 0 | 60 |
| 1 | 3 | 1 | 29 | 3 | 3 | 1 | 61 |
| 1 | 3 | 2 | 30 | 3 | 3 | 2 | 62 |
| 1 | 3 | 3 | 31 | 3 | 3 | 3 | 63 |

FIG. 1

ROW COLLECTION NUMBER

END OF PREVIOUS FRAME

NEXT FRAME AND OVERLAP

| # | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | D0 | D2 | d2 | d2 | d2 | d2 | d2 | d2 | d2 | d2 | d2 | d2 | d2 | d2 | d2 | d2 | d2 | D1 | d1 | d1 | d1 |
| 2 | d1 | D0 | D2 | d2 | d2 | d2 | d2 | d2 | d2 | d2 | d2 | d2 | d2 | d2 | d2 | d2 | d2 | d2 | D1 | d1 | d1 |
| 3 | d1 | d1 | D0 | D2 | d2 | d2 | d2 | d2 | d2 | d2 | d2 | d2 | d2 | d2 | d2 | d2 | d2 | d2 | d2 | D1 | d1 |
| 4 | d1 | d1 | d1 | D0 | D2 | d2 | d2 | d2 | d2 | d2 | d2 | d2 | d2 | d2 | d2 | d2 | d2 | d2 | d2 | d2 | D1 |
| 5 | D1 | d1 | d1 | d1 | D0 | D2 | d2 | d2 | d2 | d2 | d2 | d2 | d2 | d2 | d2 | d2 | d2 | d2 | d2 | d2 | d2 |
| 6 | d2 | D1 | d1 | d1 | d1 | D0 | D2 | d2 | d2 | d2 | d2 | d2 | d2 | d2 | d2 | d2 | d2 | d2 | d2 | d2 | d2 |
| 7 | d2 | d2 | D1 | d1 | d1 | d1 | D0 | D2 | d2 | d2 | d2 | d2 | d2 | d2 | d2 | d2 | d2 | d2 | d2 | d2 | d2 |
| 8 | d2 | d2 | d2 | D1 | d1 | d1 | d1 | D0 | D2 | d2 | d2 | d2 | d2 | d2 | d2 | d2 | d2 | d2 | d2 | d2 | d2 |
| 9 | d2 | d2 | d2 | d2 | D1 | d1 | d1 | d1 | D0 | D2 | d2 | d2 | d2 | d2 | d2 | d2 | d2 | d2 | d2 | d2 | d2 |
| 10 | d2 | d2 | d2 | d2 | d2 | D1 | d1 | d1 | d1 | D0 | D2 | d2 | d2 | d2 | d2 | d2 | d2 | d2 | d2 | d2 | d2 |
| 11 | d2 | d2 | d2 | d2 | d2 | d2 | D1 | d1 | d1 | d1 | D0 | D2 | d2 | d2 | d2 | d2 | d2 | d2 | d2 | d2 | d2 |
| 12 | d2 | d2 | d2 | d2 | d2 | d2 | d2 | D1 | d1 | d1 | d1 | D0 | D2 | d2 | d2 | d2 | d2 | d2 | d2 | d2 | d2 |
| 13 | d2 | d2 | d2 | d2 | d2 | d2 | d2 | d2 | D1 | d1 | d1 | d1 | D0 | D2 | d2 | d2 | d2 | d2 | d2 | d2 | d2 |
| 14 | d2 | d2 | d2 | d2 | d2 | d2 | d2 | d2 | d2 | D1 | d1 | d1 | d1 | D0 | D2 | d2 | d2 | d2 | d2 | d2 | d2 |
| 15 | d2 | d2 | d2 | d2 | d2 | d2 | d2 | d2 | d2 | d2 | D1 | d1 | d1 | d1 | D0 | D2 | d2 | d2 | d2 | d2 | d2 |
| 16 | d2 | d2 | d2 | d2 | d2 | d2 | d2 | d2 | d2 | d2 | d2 | D1 | d1 | d1 | d1 | D0 | D2 | d2 | d2 | d2 | d2 |
| 17 | d2 | d2 | d2 | d2 | d2 | d2 | d2 | d2 | d2 | d2 | d2 | d2 | D1 | d1 | d1 | d1 | D0 | D2 | d2 | d2 | d2 |
| 18 | d2 | d2 | d2 | d2 | d2 | d2 | d2 | d2 | d2 | d2 | d2 | d2 | d2 | D1 | d1 | d1 | d1 | D0 | D2 | d2 | d2 |
| 19 | d2 | d2 | d2 | d2 | d2 | d2 | d2 | d2 | d2 | d2 | d2 | d2 | d2 | d2 | D1 | d1 | d1 | d1 | D0 | D2 | d2 |
| 20 | d2 | d2 | d2 | d2 | d2 | d2 | d2 | d2 | d2 | d2 | d2 | d2 | d2 | d2 | d2 | D1 | d1 | d1 | d1 | D0 | D2 |
| 21 | D2 | d2 | d2 | d2 | d2 | d2 | d2 | d2 | d2 | d2 | d2 | d2 | d2 | d2 | d2 | d2 | D1 | d1 | d1 | d1 | D0 |

TIME ——→

FIG.2

50a  50b   52a  52b
50    52

FIG.6

OUTPUT CONTROL CIRCUITS

SERIAL DATA TO DISPLAY DRIVERS

DATA TO LSB AND MSB OF SPATIAL DITHER

DATA BUS X BITS

DATA BUS X BITS

DATA BUS X BITS

RAM (MSB) 6

RAM (BIT 2) 6

RAM (LSB) 6

RAM ADDRESS BUS

ADDRESS GENERATION ROM.

PICTURE STORE. (8 BITS PER PIXEL) — MSB 7 6 5 4 3 2 LSB — 4

VIDEO SOURCE 2

*FIG. 3*

14

FIG.4

CLOCK IN 46

| | $t_1$ | $t_4$ | $t_7$ | $t_1$ | $t_2$ | $t_3$ | $t_4$ | $t_5$ | $t_6$ | $t_7$ | $t_8$ | $t_9$ |
|---|---|---|---|---|---|---|---|---|---|---|---|---|
| 1 | 1 | 1 | 0 | 1 | | | | | | 1 | | |
| 2 | 0 | 1 | 1 | | | 1 | | | | | | 1 |
| 3 | 0 | 0 | 1 | | | | | | | 1 | | |
| 4 | 0 | 0 | 0 | | | | | | | | | |
| 5 | 1 | 0 | 0 | | 1 | | | | | | | |
| 6 | 0 | 1 | 0 | | | | 1 | | | | | |
| 7 | 0 | 0 | 1 | | | | | | | | 1 | |
| 8 | 0 | 0 | 0 | | | | | | | | | |
| 9 | 0 | 0 | 0 | | | | | | | | | |
| 10 | 0 | 0 | 0 | | | | | | | | | |
| 11 | 0 | 0 | 0 | | | | | | | | | |
| 12 | 0 | 0 | 0 | | | | | | | | | |
| 13 | 0 | 0 | 0 | | | | | | | | | |
| 14 | 0 | 0 | 0 | | | | | | | | | |
| 15 | 0 | 0 | 0 | | | | | | | | | |
| 16 | 0 | 0 | 0 | | | | | | | | | |
| 17 | 0 | 0 | 0 | | | | | | | | | |
| 18 | 0 | 0 | 0 | | | | | | | | | |
| 19 | 0 | 0 | 0 | | | | | | | | | |
| 20 | 0 | 0 | 0 | | | | | | | | | |
| 21 | 1 | 0 | 0 | | | 1 | | | | | | |

FIG. 5